Europäisches Patentamt

European Patent Office

Office européen des brevets

(11) Veröffentlichungsnummer: **0 028 800**
**B1**

(12) EUROPÄISCHE PATENTSCHRIFT

(45) Veröffentlichungstag der Patentschrift: **05.09.84**

(51) Int. Cl.³: **F 24 J 3/02**

(21) Anmeldenummer: **80106780.2**

(22) Anmeldetag: **04.11.80**

(54) Vorrichtung zur Nutzung der Wärmeeinstrahlung der Sonne.

(30) Priorität: **07.11.79 DEU 7931468**

(43) Veröffentlichungstag der Anmeldung:
**20.05.81 Patentblatt 81/20**

(45) Bekanntmachung des Hinweises auf die
Patenterteilung:
**05.09.84 Patentblatt 84/36**

(84) Benannte Vertragsstaaten:
**AT CH DE FR GB IT LI NL SE**

(56) Entgegenhaltungen:
**DE-A-2 511 861
DE-A-2 651 847
DE-A-2 708 128
DE-B-1 048 008
US-A-4 162 671**

(73) Patentinhaber: **Assmann, Karl, Dipl.-Ing.**
**Lindenallee 3**
**D-8124 Seeshaupt (DE)**

(72) Erfinder: **Assmann, Karl, Dipl.-Ing.**
**Lindenallee 3**
**D-8124 Seeshaupt (DE)**

(74) Vertreter: **Schwan, Gerhard, Dipl.-Ing.**
**Elfenstrasse 32**
**D-8000 München 83 (DE)**

Courier Press, Leamington Spa, England.

EP 0 028 800 B1

## Beschreibung

Die Erfindung betrifft eine Vorrichtung zur Nutzung der Wärmeeinstrahlung der Sonne an einem Gebäude mit im Außenwandbereich vorgesehenen Luftkanälen zur Zirkulation von mittels Sonnenenergie aufgewärmter Luft.

Bei einer bekannten Vorrichtung dieser Art (DE—A 2 511 861) reichen die Luftkanäle in mindestens einem Querschnitt des Gebäudes geschlossen rings um das Gebäude herum, d.h. sie erstrecken sich von der einen Gebäudeseite über das Dach, entlang der anderen Gebäudeseite sowie unterhalb des Bodens zurück. Im Bereich der Gebäudeseitenwände verlaufen die Luftkanäle in den Außenwänden. Auf der Süddachseite sitzt unter einer Luftdichten Deckschicht ein Sonnenwärme absorbierender Körper. Zwischen letzterem und der Deckschicht befindet sich ein weiterer Luftkanal, an dessen oberem Ende ein Rückschlagventil angeordnet ist. Ein Nebenschlußkanal ist zwischen dem Absorberkörper und der Dachinnenfläche vorgesehen. Unterhalb des Gebäudebodens reichen die Luftkanäle durch einen Wärmespeicher hindurch. Bei Sonneneinstrahlung auf der Südseite des Gebäudes absorbiert der Körper Sonnenwärme, wodurch Luft in dem Kanal zwischen der Deckschicht und dem Absorberkörper erwärmt wird. Diese Luft steigt nach oben und durchströmt im wesentlichen ungehindert das Rückschlagventil. Von dort aus gelangt sie in die Luftkanäle auf der Nordseite des Gebäudes. Sie kühlt sich dort ab und sinkt nach unten. Der unter dem Gebäudeboden angeordnete Wärmespeicher speichert in dem Luftstrom noch enthaltene Wärme. Ausgehend von dem Wärmespeicher strömt die Luft dann über die Luftkanäle auf der Gebäudesüdseite zurück. Bei verminderter Wärmeeinstrahlung kehrt sich dagegen die Strömungsrichtung der Luft um, weil das Rückschlagventil die Luftströmung in dem weiteren Luftkanal herabsetzt. Der Luftstrom wird gezwungen, den Nebenschlußkanal zu durchströmen. Im Bereich der Deckschicht und des Absorberkörpers ist die Wärmedämmung am geringsten. Infolgedessen kühlt sich dort die Luft am schnellsten ab. Sie strömt in dem Nebenschlußkanal nach unten, um über die Kanäle auf der Südseite zum Wärmespeicher zu gelangen. Dort aufgewärmte Luft steigt in den Kanälen auf der Gebäudenordseite hoch.

Die bekannte Lösung ist nur funktionsfähig, wenn das Kanalsystem in mindestens einem Gebäudequerschnitt ringsum geschlossen ist und in diesem Kanalsystem ein von dem zirkulierenden Luftstrom durchströmter Wärmespeicher vorhanden ist. Dies macht eine nachträgliche Ausstattung von Gebäuden mit der bekannten Vorrichtung unmöglich. Der zusätzliche Wärmespeicher ist relativ aufwendig.

Daneben ist es bekannt, vor eine massive Außenwand von Gebäuden Dämmplatten und Putz oder Plattenverkleidungen zu setzen. Dabei hat die Dämmplatte die Aufgabe, in der kalten Jahreszeit Wärmeverluste zu vermindern. Die Dämmplatte setzt jedoch nicht nur dem Transport von Wärme von innen nach außen, sondern in entsprechender Weise auch dem Wärmeübergang von außen nach innen einen Widerstand entgegen. Sie beeinträchtigt oder verhindert infolgedessen die Nutzbarmachung der Wärmeeinstrahlung der Sonne, die auch in der kalten Jahreszeit erhebliche Werte annimmt. Zudem entstehen durch den Wärmestau auf der Außenhaut besonders im Sommer Probleme durch Überhitzung und Wärmespannungen sowie erhöhten Wasserdampf-Diffusionswiderstand.

Der Erfindung liegt die Aufgabe zugrunde, eine Vorrichtung zu schaffen, die ohne um das Gebäude herumlaufende Luftzirkulationskanäle auskommt und infolgedessen auf einzelne Außenwandbereiche, zweckmäßig Südwände, beschränkt sein kann, die sich auch nachträglich an bereits vorhandenen Gebäuden problemlos installieren läßt und die keinen kostspieligen zusätzlichen Wärmespeicher bedingt.

Diese Aufgabe wird erfindungsgemäß dadurch gelöst, daß vor eine massive Außenwand eine Trennplatte und eine wetterfeste Außenhaut aus Putz oder Plattenverkleidung gesetzt sind und daß die Luftkanäle jeweils in vertikaler Richtung verlaufend, einerseits als außenliegende Luftkanäle zwischen der Außenhaut und der Trennplatte sowie andererseits als innenliegende Luftkanäle zwischen der Trennplatte und der Außenwand angeordnet und derart miteinander verbunden sind, daß eingestrahlte Sonnenenergie durch Zirkulation von Luft aus den außenliegenden Luftkanälen in die innenliegenden Luftkanäle auf die Außenwand übertragbar ist.

Bei der Vorrichtung nach der Erfindung zirkuliert die Luft um die Trennplatte, die grundsätzlich beliebige Höhe haben kann. Die massive Außenwand des Gebäudes wird als Wärmespeicher genutzt, denn die eingestrahlte Wärmeenergie der Sonne wird auf die hinter der Trennplatte liegende Massivwand übertragen. Durch die Abfuhr von Wärme von der Außenhaut wird Überhitzungen und Wärmespannungen vorgebeugt. Der Wasserdampf-Diffusionswiderstand wird klein gehalten.

In weiterer Ausgestaltung der Erfindung ist die Trennplatte als Dämmplatte ausgebildet. Damit wird eine Dämmwirkung gegenüber Wärmeverlusten von innen nach außen erzielt, gleichwohl aber von der Wärmeeinstrahlung der Sonne Gebrauch gemacht.

Die Luftkanäle auf einer oder beiden Seiten der Dämmplatte können durch eine entsprechende Profilierung der Dämmplatte gebildet sein.

Die wetterfeste Außenhaut kann zweckmäßig aus einem Putz bestehen, der wärmeabsorbierenden Füllstoffe enthält und dadurch Sonnenenergie in verstärktem Maße aufnehmen und an den dahinterliegenden Luftkanal abgeben kann.

In weiterer Ausgestaltung der Erfindung kann die wetterfeste Außenhaut aus einem transluzenten Putz bestehen, der durch Kunstharz mit verschiedenen Füllstoffen gebundene Glasperlen oder Glasgranulate enthält, welche zweckmäßig die Sonneneinstrahlung auf eine kanalseitig ausgebrachte Absorberschicht übertragen. Entsprechend einer abgewandelten Ausführungsform kann die wetterfeste Außenhaut aus einer hochtransparenten Glas- oder Kunststoffplatte bestehen, welche die Sonneneinstrahlung auf eine wärmeabsorbierende Kanalauskleidung überträgt.

Die gegenseitige Verbindung der Luftkanäle vor und hinter der Dämmplatte kann durch thermostatgesteuerte Ventilklappen erfolgen, die sich bei einer positiven Temperaturdifferenz zwischen dem äußeren und dem inneren Kanalsystem öffnen und die bei einer negativen Temperaturdifferenz zwischen den beiden Kanalsystemen schließen. Aus diese Weise werden bei einem Wärmeüberschuß die Luftzirkulation und die Wärmespeicherung in der Massivwand ermöglicht. Bei einem Wärmedefizit wird dagegen der Wärmeaustausch über die Kanäle von der einen zur anderen Seite der Dämmplatte unterbunden.

Entsprechend einer abgewandelten Ausführungsform der Erfindung kann für die erwünschte Luftzirkulation zwischen Außen- und Innenseite der Dämmplatte durch ein zwischen der Wand und der Dämmplatte liegendes Doppelkanalsystem gesorgt werden, das als Warmluftfalle funktioniert und nur die warme Luft infolge der eigenen Thermik aufsteigen und zirkulieren läßt, jedoch eine umgekehrte Zirkulation bei sich abkühlendem Luftstrom durch die eigene Schwerkraft der Luft verhindert (Wärmestau).

Die Erfindung ist im folgenden anhand von bevorzugten Ausführungsbeispielen näher erläutert. In den beiliegenden Zeichnungen zeigen:

Fig. 1 einen Horizontalschnitt durch eine mit einer Wärmespeicherdämmung nach der Erfindung ausgestattete Gebäudeaußenwand,

Fig. 2 einen Vertikalschnitt der Ausführungsform nach Fig. 1,

Fig. 3 einen Horizontalschnitt für eine abgewandelte Ausführungsform der Erfindung, und

Fig. 4 einen Vertikalschnitt der Ausführungsform nach Fig. 3.

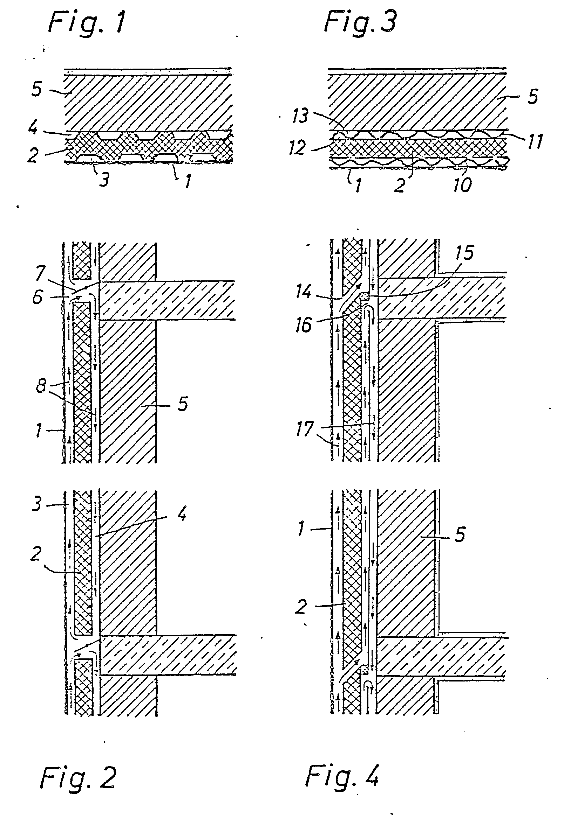

Entsprechend den Fign. 1 und 2 sitzt hinter einer wetterfesten Außenheit 1 eine Dämmplatte 2. Die Dämmplatte 2 ist derart profiliert (Fig. 1), daß zwischen der Außenhaut 1 und der Dämmplatte 2 eine erste Folge · von Luftkanälen 3 gebildet wird, während eine zweite Folge von Luftkanälen 4 zwischen der Dämmplatte 2 und einer Massivwand 5, insbesondere einer wärmespeicherfähigen Mauer, vorhanden ist. In vorbestimmten Abständen, die beispielsweise gemäß Fig. 2 den Geschoßhöhen entsprechen, sind Durchlässe 6 vorgesehen, die eine Verbindung zwischen dem äußeren Kanalsystem 3 und dem inneren Kanalsystem 4 herstellen. Im Bereich der Durchlässe 6 sind thermostatgesteuerte Ventilklappen 7 angeordnet. Während Zeiten der Einstrahlung von Sonnenenergie und einer damit verbundenen positiven Temperaturdifferenz zwischen dem äußeren und dem inneren Kanalsystem 3 bzw. 4 öffnen die Ventilklappen 7. Es wird auf diese Weise eine Verbindung zwischen den beiden Kanalsystemen hergestellt, so daß sich eine Luftzirkulation ausbildet, wie sie in Fig. 2 bei 8 mittels Pfeilen angedeutet ist. Warmluft steigt in den äußeren Luftkanälen 3 hoch und wird über die Durchlässe 6 zu den inneren Luftkanälen 4 umgeleitet. Dort gibt die Luft ihre Wärme an die Massivwand 5 ab. Die Luft kühlt sich dabei ab und strömt in den inneren Kanälen 4 nach unten, um anschließend wieder in die äußeren Kanäle 3 zu gelangen und dort erneut mit Wärmeenergie beladen zu werden.

Stellt sich dagegen zwischen dem äußeren inneren Kanalsystem eine negative Temperaturdifferenz ein, schließen die Ventilklappen 7. Sie verhindern auf diese Weise eine Umkehrung der Luftzirkulation, durch die in unerwünschter Weise Wärme von innen nach außen transportiert würde. ·

Bei der abgewandelten Ausführungsform nach den Fign. 3 und 4 sitzen zwischen der Außenhaut 1 under der Dämmplatte 2 sowie zwischen der Dämmplatte 2 und der Massivwand 5 jeweils eine Wellplatte 10 bzw. 11. Wesentlichen ist dabei, daß die Wellplatte 11 im Bereich zwischen Massivwand 5 und der Dämmplatte 2 ein Doppelkanalsystem mit äußeren Luftkanälen 12 und inneren Luftkanälen 13 bildet. Zwischen der Dämmplatte 2 und der Außenhaut 1 kann auch ein Kanalsystem entsprechend dem System 3 der Fig. 1 vorhanden sein. In vorbestimmten Abständen, die beispielsweise gemäß Fig. 4 wiederum den Geschoßhöhen entsprechen, sind Durchlässe 14 vorhanden, über die Luft aus dem Kanalsystem vor der Dämmplatte 2, im dargestellten Ausführungsbeispiel also aus den Luftkanälen zu beiden Seiten der Wellplatte 10, in die äußeren Luftkanäle 12 des von der Wellplatte 11 gebildeten Doppelkanalsystems übertreten kann. Jeweils unmittelbar unterhalb des innenliegenden Endes der Durchlässe 14 befinden sich in den äußeren Luftkanälen 12 des Doppelkanalsystems Luftumlenkelement 15, während unterhalb der Luftumlenkelemente 15 Durchlässe 16 vorhanden sind, die eine Verbindung zwischen den äußeren und inneren Luftkanälen des Doppelkanalsystems 12, 13 herstellen.

Bei einer positiven Temperaturdifferenz zwischen Außen- und Innenseite der Dämmplatte 2 kommt es zur Ausbildung der in Fig. 4 mit Pfeilen angedeuteten Luftzirkulation 17. In den Luftkanälen auf der Außenseite der Dämmplatte 3 erwärmte Luft steigt hoch und gelangt über die Durchlässe 14 in die äußeren Luftkanäle 12 des Doppelkanalsystems zwischen Dämmplatte 2 und Massivwand 5. Diese Luft kehrt im Bereich der Luftumlenkelemente 15 und der Durchlässe 16 um und fällt in den inneren Luftkanälen 13 nach unten, wobei sie Wärme an die Wand 5 abgibt. Eine umgekehrte Luftzirkulation wird jedoch durch die Schwerkraft der Luft verhindert.

Im Winterbetrieb ist es zweckmäßig, am nicht dargestellten oberen Wandende alle Kanäle abzuschließen. Dagegen werden im Sommerbetrieb vorteilhaft sämtliche Kanäle am oberen Wandende aufgemacht, um eine unerwünschte Wärmeübertragung auf das Mauerwerk auszuschließen.

Die ökonomische und ökologische Bedeutung der geschilderten Wärmespeicherdämmung besteht darin, daß zusätzlich zur Erzielung einer verbesserten Wärmedämmung und Dampfdiffusion die direkte Sonneneinstrahlung aufgenommen und als Wärmeenergie gespeichert werden kann. Dadurch wird der Energiebedarf für die Raumheizung beträchtlicht verringert. Die Dauer der Heizperiode wird stark verkürzt. Neben der Energieeinsparung erbringt eine solche natürliche Wärmenutzung eine Entlastung der Umwelt durch weniger Abwärme und verminderte Schadstoffemission. Aufgrund der wiederherstellten Wandatmung werden die bauphysikalischen und raumklimatischen Bedingungen ebenfalls erhebich verbessert.

Da die Luftkanäle 3, 4 12, 13 bereits eine erhebliche eigene Wärmedämmwirkung haben, kann gegebenenfalls auf die Verwendung einer eigenen Dämmplatte 2 verzichtet und statt einer solchen Dämmplatte eine einfache Trennplatte vorgesehen sein. Als Trennplatte eignet sich beispielsweise eine Wellpappe der in Fig. 3 dargestellten Art.

## Patentansprüche

1. Vorrichtung zur Nutzung der Wärmeeinstrahlung der Sonne an einem Gebäude mit im Außenwandbereich vorgesehenen Luftkanälen zur Zirkulation von mittels Sonnenenergie aufgewärmter Luft, dadurch gekennzeichnet, daß vor eine massive Außenwand (5) eine Trennplatte (2) und eine wetterfeste Außenhaut (1) aus Putz oder Plattenverkleidung gesetzt sind und daß die Luftkanäle (3, 4, 12, 13), jeweils in vertikaler Richtung verlaufend, einerseites als außenliegende Luftkanäle (3) zwischen der Außenhaut (1) und der Trennplatte (2) sowie andererseits als innenliegende Luftkanäle (4, 12, 14) zwischen der Trennplatte (2) und der Außenwand (5) angeordnet und derart miteinander verbunden sind, daß eingestrahlte Sonnenenergie durch Zirkulation von Luft aus den außenliegenden Luftkanälen (3) in die innenliegenden Luftkanäle (4, 12, 13) auf die Außenwand (5) übertragbar ist.

2. Vorrichtung nach Anspruch 1, dadurch gekennzeichnet, daß die Trennplatte (2) als Dämmplatte ausgebildet ist.

3. Vorrichtung nach Anspruch 2, dadurch gekennzeichnet, daß die Luftkanäle (3, 4) auf mindestens einer Seite der Dämmplatte (2) durch entsprechende Profilierung der Dämmplatte gebildet sind.

4. Vorrichtung nach einem der Ansprüche 1 bis 3, dadurch gekennzeichnet, daß die wetterfeste Außenhaut (1) aus einem wärmeabsorbierenden Füllstoffe aufweisenden Putz besteht.

5. Vorrichtung nach einem der Ansprüche 1 bis 4, dadurch gekennzeichnet, daß die wetterfeste Außenhaut (1) aus einem transluzenten Putz besteht, der durch Kunstharz mit Füllstoffen gebundene Glasperlen oder Glasgranulate enthält.

6. Vorrichtung nach einem der Ansprüche 1 bis 3, dadurch gekennzeichnet, daß die wetterfeste Außenhaut (1) aus einer hochtransparenten Glas- oder Kunststoffplatte besteht.

7. Vorrichtung nach Anspruch 5 oder 6, dadurch gekennzeichnet, daß auf die wetterfeste Außenhaut (1) kanalseitig eine Absorberschicht aufgebracht ist.

8. Vorrichtung nach einem der Ansprüche 5 bis 7, dadurch gekennzeichnet, daß eine wärmeabsorbierenden Kanalauskleidung für mindestens die der wetterfesten Außenhaut (1) zugewendeten Luftkanäle vorgesehen ist.

9. Vorrichtung nach einem der Ansprüche 2 bis 8, dadurch gekennzeichnet, daß die auf der Außen- und der Innenseite der Dämmplatte (2) liegenden Luftkanäle (3, 4) in vorbestimmten Abständen durch thermostatgesteuerte Ventilklappen (7) untereinander verbunden sind, die bei positiver Temperaturdifferenz zwischen den Känälen öffnen und die Luftzirkulation zulassen sowie bei negativer Temperaturdifferenz schließen und den Luftaustausch zwischen den Luftkanälen an der Außen- und der Innenseite der Dämmplatte unterbinden.

10. Vorrichtung nach einem der Ansprüche 2 bis 8, dadurch gekennzeichnet, daß zwischen der Wand (5) und der Dämmplatte (2) ein Doppelkanalsystem (12, 13) vorgesehen ist, das die durch Eigenthermik aufsteigende Warmluft zirkulieren läßt, die fallende Kaltluft jedoch durch die eigene Schwerkraftwirkung am Zirkulieren hindert.

## Revendications

1. Dispositif pour utiliser le pouvoir calorifique du rayonnement solaire dans un bâtiment ou un immeuble comportant dans la région de la paroi extérieure, des canaux d'air pour la circulation de l'air échauffé par l'énergie solaire, caractérisé en ce que devant la paroi extérieure massive (5) est placée une plaque de séparation (2) et une peau extérieure résistante aux intempéries (1) constituée par un crépi ou par une plaque de revêtement et en ce que les canaux d'air (3, 4, 12, 13), s'étendent respectivement dans le sens vertical, sont montés, d'une part, en tant que canaux d'aire extérieurs (3) entre la peau extérieure (1) et la plaque de séparation (2) et, d'autre part, en tant que canaux d'air intérieurs (4, 12, 13) entre la plaque de séparation (2) et la paroi extérieure (5) et sont reliés ensemble de telle manière que l'énergie du rayonnement solaire peut être transférée à la paroi extérieure (5) par la circulation de l'air des canaux d'air extérieurs (3) aux canaux d'air intérieurs (4, 12, 13).

2. Dispositif selon la revendication 1, caractérisé en ce que la plaque de séparation (2) est constituée par une plaque isolante.

3. Dispositif selon la revendication 2, caractérisé en ce que les canaux d'air (3, 4) sont formés sur l'une au moins, des faces de la plaque isolante (2) par un profilage approprié de celle-ci.

4. Dispositif selon l'une quelconque des revendications 1 à 3, caractérisé en ce que la peau extérieure résistant aux intempéries (1) est constituée par un crépi contenant des matières de charge absorbant la chaleur.

5. Dispositif selon l'une quelconque des revendications 1 à 4, caractérisé en ce que la peau extérieure résistant aux intempéries (1) est constituée par un crépi translucide contenant des perles ou des granules de verre liées aux matières de charge par une résine synthétique.

6. Dispositif selon l'une quelconque des revendications 1 à 3, caractérisé en ce que la peau extérieure résistant aux intempéries (1) est constituée par une plaque de verre ou de matière plastique extrêmement transparente.

7. Dispositif selon la revendication 5 ou 6, caractérisé en ce que sur la peau extérieure résistant aux intempéries (1) est fixée, du côté des canaux, une couche absorbante.

8. Dispositif selon l'une quelconque des revendications 5 à 7, caractérisé en ce qu'un revêtement absorbant la chaleur est prévu, au moins, pour les canaux d'air tournés vers la peau extérieure résistant aux intempéries (1).

9. Dispositif selon l'une quelconque des revendications 2 à 8, caractérisé en ce que les canaux d'air (3, 4) situés sur la face extérieure et sur la face intérieure de la plaque isolante (2) sont reliés ensemble, à des intervalles prédéterminés, par des registres à commande thermostatiques (7) qui, dans le cas d'une différence de températures positives entre les canaux, s'ouvrent et permettent à l'air de circuler et qui, dans le cas d'une différence de températures négatives se referment de empêchent la circulation de l'air entre les canaux d'air des faces extérieures et intérieures de la plaque isolante.

10. Dispositif selon l'une quelconque des revendications 2 à 8, caractérisé en ce que, entre la paroi (5) et la plaque isolante (2), est prévu un système de double canaux (12, 13) qui permet à l'air ascendant de circuler par ses propres moyens, tout en empêchant l'air froid descendant de circuler sous l'effet de la gravité ou de la pesanteur.

## Claims

1. An apparatus for using the heat absorption of the sun on a building with air passages provided in the region of an outside wall for the circulation of air heated by means of solar energy, characterised in that a separating panel (2) and a weatherproof outer skin (1) of plaster or tile lining are placed in front of a solid outside wall (5) and that the air passages (3, 4, 12, 13), extending in the vertical direction in each case, are disposed on the one hand as external air passages (3) between the outer skin (1) and the separating panel (2) and on the other hand as internal air passages (4, 12, 13) between the separating panel (2) and the outer wall (5) and are connected to one another in such a manner that the absorbed solar energy can be transmitted, by circulation of air, from the outer air passages (3) into the inner air passages (4, 12, 13) on the outside wall (5).

2. An apparatus as claimed in Claim 1, characterised in that the separating panel (2) is constructed in the form of insulating board.

3. An apparatus as claimed in Claim 2, characterised in that the air passages (3, 4) are formed on at least one side of the insulating board (2) by appropriate profiling of the insulating board.

4. An apparatus as claimed in any one of Claims 1 to 3, characterised in that the weatherproof outer skin (1) consists of plaster comprising a heat-absorbing filler.

5. An apparatus as claimed in any one of Claims 1 to 4, characterised in that the weatherproof outer skin (1) consists of a translucent plaster which contains glass beads or granulated glass material bonded with fillers by synthetic resin.

6. An apparatus as claimed in any one of Claims 1 to 3, characterised in that the weatherproof outer skin (1) consists of a highly transparent sheet of glass or plastics material.

7. An apparatus as claimed in Claim 5 or 6, characterised in that an absorber layer is applied to the weatherproof outer skin (1) at the passage side.

8. An apparatus as claimed in any one of Claims 5 to 7, characterised in that a heat-absorbing passage lining is provided at least for the air passages adjacent to the weatherproof outer skin (1).

9. An apparatus as claimed in any one of claims 2 to 8, characterised in that the air passages (3, 4) situated at the outside and the inside of the insulating board (2) are connected to one another at predetermined intervals by thermostatically controlled valve flaps (7) which, in the event of a positive temperature difference between the passages, open and permit the air circulation, and in the event of a negative temperature difference, close and prevent the exchange of air between the air passages at the outside and the inside of the insulating board.

10. An apparatus as claimed in any one of Claims 2 to 8, characterised in that there is provided between the wall (5) and the insulating board (2) a double passage system (12, 13) which allows the warm air rising through a natural upcurrent to circulate but prevents the falling cold air from circulating by the action of its own force of gravity.

6

Fig. 1

Fig. 3

Fig. 2

Fig. 4